Europäisches Patentamt

European Patent Office

Office européen des brevets

(19)

(11) Veröffentlichungsnummer: **0 076 335**
**B1**

(12) **EUROPÄISCHE PATENTSCHRIFT**

(45) Veröffentlichungstag der Patentschrift:
03.07.85

(51) Int. Cl.⁴: **B 61 H 15/00**

(21) Anmeldenummer: **81107799.9**

(22) Anmeldetag: **01.10.81**

(54) Nachstelleinrichtung für das Bremsgestänge von Schienenfahrzeugen.

(43) Veröffentlichungstag der Anmeldung:
**13.04.83 Patentblatt 83/15**

(45) Bekanntmachung des Hinweises auf die Patenterteilung:
**03.07.85 Patentblatt 85/27**

(84) Benannte Vertragsstaaten:
**CH DE FR IT LI SE**

(56) Entgegenhaltungen:
**DE - A - 2 937 752**
**SE - B - 386 629**

(73) Patentinhaber: **Knorr-Bremse GmbH, Moosacher Strasse 80, D-8000 München 40 (DE)**

(72) Erfinder: **Sander, Nils Börje Lennart, Torpslingan 3, S-28300 Osby (SE)**

## Beschreibung

Die Erfindung betrifft eine Nachstelleinrichtung für das Bremsgestänge von Schienenfahrzeugen, bei welchen die wirksame Länge einer zwischen zwei Bremshebeln eingeordneten Zugstange einstellbar ist und die Zugstange aus zwei Zugstangenkörpern besteht, die sich beidseitig des Rads erstrecken, während wenigstens einer der Bremshebel aus zwei im wesentlichen identischen Bremshebelkörpern besteht und mittels einer Traverse schwenkbar an den zwei Zugstangenkörpern angelenkt ist, wobei die Traverse materialeinheitlich mit einer Mutter besteht, welche auf eine drehbare Gewindespindel aufgeschraubt ist, die durch Blockiermittel in beiden Drehrichtungen relativ zu einer Querstange blockierbar ist.

Spiel-Nachsteller für Bremsgestänge von Schienenfahrzeugen sind als an sich bekannt anzusehen; sie sind ihrer Funktion nach entweder manuell betätigbar oder automatisch wirkend. Gewöhnlich sind derartige Nachstelleinrichtungen in der Bremskraftübertragungseinrichtung angeordnet, falls ihre Nachstellfähigkeit bzw. das Ausmass der Nachstellbarkeit beträchtlich sein sollte. Nachstelleinrichtungen dieser Art können jedoch auch alternativ in einer Druckstange angeordnet sein, zum Beispiel in der Kolbenstange einer Kolben-Zylinder-Einrichtung, falls nur mittleres Nachstellmass erforderlich ist und falls das Bremsgestänge bzw. die Bremseinheit einer kompakten Bauform entsprechen sollte.

Aus der DE-A Nr. 2937752 ist eine selbsttätig von Hand rückstellbare Nachstelleinrichtung mit den eingangs genannten Merkmalen bekannt. Hierbei beinhaltet jeder Zugstangenkörper eine Gewindespindel mit Mutter und es können besondere Mittel erforderlich sein, um eine synchrone Längeneinstellung beider Zugstangenkörper zu gewährleisten. Diese Nachstelleinrichtung erfordert einen beachtlichen Bauaufwand.

Eine Bremsklotzgestängeanordnung mit einem automatischen Gestängesteller in einer Zugstange, zwischen zwei Bremshebeln befindlich, ist in der Schwedischen Patentschrift Nr. 386629 beschrieben. Jedoch ist ein derartiges Bremsgestänge bei sehr kompakter Bauart nur mit einer begrenzten Nachstellfähigkeit ausgerüstet.

Davon ausgehend ist die vorliegende Erfindung darauf gegründet, dass die Gesamtlänge eines Bremsgestänges mit erwünschtem konstanten Spiel zwischen den Verschleissflächen der Bremsteile von einer Anzahl von Variablen abhängt: vom Verschleiss an den Bremsklötzen, vom Verschleiss an der Lauffläche des Rades, vom Austausch der Bremsklötze und schliesslich von der Bearbeitung der Lauffläche de Rades. Ein Ausgleich des Spiels infolge von maschineller Bearbeitung (oder Austausch) der Lauffläche des Rades braucht nicht automatisch durchgeführt zu werden. Das Bremsgestänge sollte jedoch ohne weiteres manuell einstellbar sein, um maximale Spielveränderungen, hervorgerufen durch Veränderungen im Raddurchmesser, zu kompensieren. Die Aufgabe der vorliegenden Erfindung besteht darin, eine Bremseinheit bzw. ein Bremsgestänge der eingangs genannten Art so weiterzubilden, dass gewisse Einstellungen in einfacher Weise manuell durchführbar sind.

Die Lösung dieser Aufgabe besteht gemäss den Merkmalen des Kennzeichnungsteils des Patentanspruches 1 darin, dass die zwei Bremshebelkörper schwenkbar an der Traverse angebracht sind, dass die Gewindespindel in der an den zwei Zugstangenkörpern angebrachten Querstange gelagert ist, dass die Blockiermittel in vorbestimmten relativen Axialpositionen der Gewindespindel und der Querstange wirksam sind, und dass eine Feder elastisch die Gewindespindel und die Querstange in ihrer relativen Blockierposition zueinander hält.

Die Erfindung ist nachfolgend anhand eines Ausführungsbeispiels unter Bezugnahme auf die beigefügte Zeichnung erläutert.

In Fig. 1 ist in schematischer Weise eine Bremsklotz-Gestängeanordnung bekannter Art dargestellt, welche gemäss der Erfindung modifizierbar ist;

Fig. 2 gibt einen Teil der erfindungsgemässen Bremsgestängeanordnung wieder;

Fig. 3 gibt eine vergrösserte Einzelansicht eines Teils nach Fig. 2 wieder.

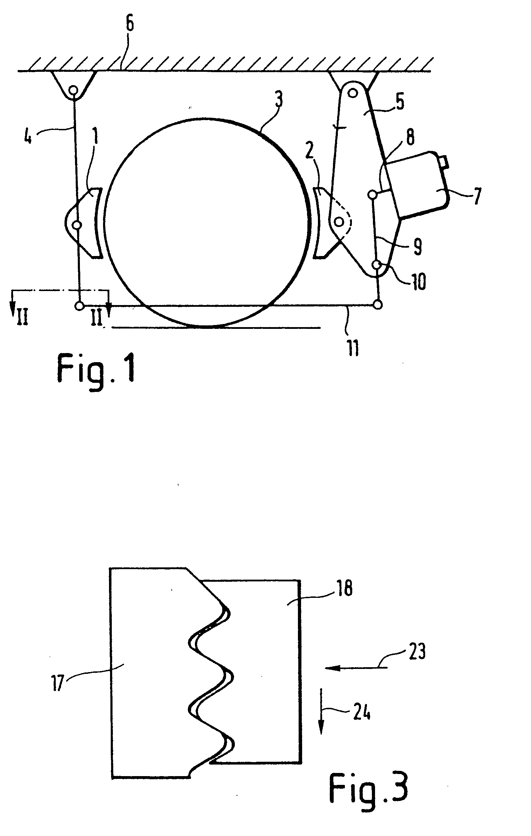

Das schematisch in Fig. 1 dargestellte Bremsgestänge entspricht einer Art, welche zum Beispiel aus der DE-A Nr. 2937752 bekannt ist. Das Bremsgestänge enthält ein Paar von Bremsklötzen 1, 2, welche an die Lauffläche 3 eines Schienenfahrzeugrades anlegbar sind. Die Bremsklötze 1, 2 sind an Bremshebeln 4, 5 angebracht, welche ihrerseits am Rahmen 6 des Schienenfahrzeugs angelenkt sind. Der Bremshebel 5 trägt einen Bremszylinder 7, in welchem ein Kolben bewegbar geführt ist. Die Kolbenstange 8 des Kolbens erstreckt sich aus dem Bremszylinder 7 und ist schwenkbar mit einem zweiarmigen Hebel 9 verbunden. Der Hebel 9 ist schwenkbar bei 10 am Bremshebel 5 angelenkt. Das untere Ende des zweiarmigen Hebels 9 ist verschwenkbar mit einer Zugstange 11 verbunden, deren anderes Ende mit dem Bremshebel 4 verbunden ist. Bei Betätigung des Bremszylinders 7 wird die Kolbenstange 8 ausgefahren und verursacht eine gemäss Darstellung gegen den Uhrzeigersinn gerichtete Drehung des Hebels 9. Durch die Bewegung des unteren Endes des Hebels 9 wird die Zugstange 11 gemäss Fig. 1 nach rechts gerichtet bewegt. Die Bremshebel 4 und 5 bewegen nunmehr die Bremsklötze 1 und 2 in Anlage mit der Lauffläche 3 des Rades. Bremsgestänge bzw. Bremseinheiten dieser bekannten Bauart werden des öfteren dort verwendet, wo nur begrenzter Bauraum zur Verfügung steht. Es kann infolgedessen unmöglich oder schwierig sein, einen Bremszylinder mit integriertem Gestängesteller zu verwenden, und es kann auch schwierig sein, einen Gestängesteller in der Zugstange 11 anzuordnen. In einer gewissen Anzahl von Anwendungsfällen kann es jedoch möglich sein, automatisch wirkende Gestängesteller von kleiner Grösse zu verwenden, d. h. Nachsteller, welche nur in der Lage sind, einen Verschleiss an den Bremsflächen nachzustellen, nicht jedoch

3   0 076 335   4

Veränderungen am Raddurchmesser, welche durch Bearbeitung der Lauffläche hervorgerufen werden.

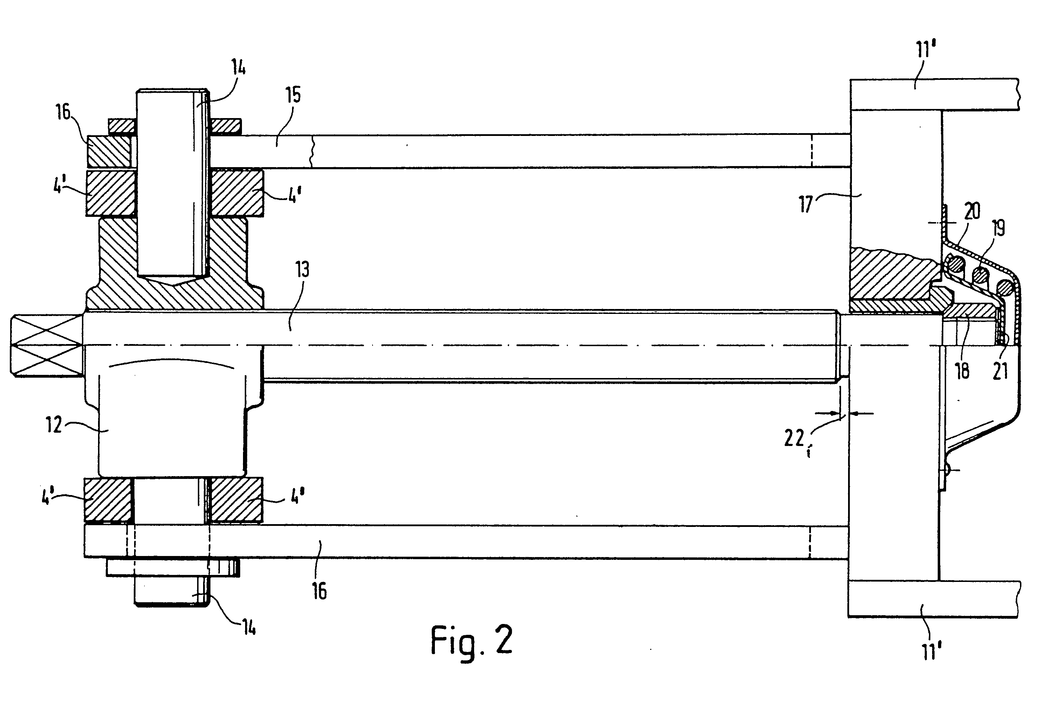

In Fig. 2 ist eine erfindungsgemässe Ausführungsform des Teils des Bremsgestänges von Linie II-II in Fig. 1, jedoch in vergrössertem Massstab, wiedergegeben. Gemäss Fig. 2 ist der Bremshebel 4 aus einem Paar einander gleicher Bremshebelkörper gebildet, welche parallel zueinander angeordnet an einer Traverse 12 schwenkbar angelenkt sind. Der Mittelteil dieser Traverse ist als eine Mutter ausgebildet, welche auf eine Gewindespindel 13 aufgeschraubt ist. Das gemäss Fig. 2 linke Ende der Gewindespindel 13 besitzt quadratischen Querschnitt, so dass es durch einen Schlüssel oder ein anderes Werkzeug ergriffen werden kann. Die Schwenkverbindung zwischen den Bremshebelkörpern 4' und der Traverse 12 wird durch Bolzen 14 gebildet, die in Schlitzen 15 gelagert sind. Die Schlitze 15 befinden sich in Stangen 16, die sich von einer Querstange 17 nach links gerichtet erstrecken. Die Querstange 17 ist ihrerseits starr mit dem linken Ende der Zugstange 11 verbunden, welche aus einem Paar von einzelnen Zugstangenkörpern 11', zu beiden Seiten des Rades sich erstreckend (nicht in Fig. 2 dargestellt), bestehen. Das rechte Ende der Gewindespindel 13 ist in der Querstange 17 gelagert und ist mit einem radial sich erstreckenden Bund 18 versehen, an welchem eine Zahnkupplungsfläche ausgebildet ist. Diese Kupplungsfläche wirkt mit einer entsprechenden Kupplungsfläche an der Querstange 17 zusammen. Die Gestaltung der Kupplungsflächen ist in Fig. 3 im einzelnen dargestellt und nachfolgend beschrieben. Eine Feder 19 ist vorgespannt zwischen einem Federlager 20 und einem weiteren Federlager 21 angeordnet. Das Federlager 20 ist an der Querstange 17 befestigt, während das Federlager 21 an der Gewindespindel 13 angebracht ist. Die Gewindespindel 13 ist um den Abstand 22 axial relativ zur Querstange 17 verschiebbar.

In Fig. 3 sind schematisch die Kupplungsflächen des Bundes und der Querstange dargestellt. Die Flächen sind kegelstumpfförmig und besitzen im zylindrischen Schnitt sägezahnförmige Kontur. Fig. 3 gibt ihre Aussenfläche in abgewickelter Ebene wieder. Der an der Gewindespindel 13 befestigte Bund 18 steht unter der Einwirkung der Feder 20, welche die durch den Pfeil 23 wiedergegebene, axiale Kraft einleitet. Das (infolge der sägezahnförmigen Kontur der Kupplungsflächen bestehende) Drehmoment in Richtung des Pfeils 24 löst eine Axialkraft aus, welche der Kraft 23 entgegenwirkt und demgemäss eine Axialbewegung der Gewindespindel 13 relativ zur Querstange 17 verursacht.

Die vorbeschriebene Vorrichtung arbeitet wie folgt:

Falls am linken Ende der Gewindespindel 13 ein Drehmoment mit Hilfe eines geeigneten Werkzeugs ausgeübt wird, dann verursacht dieses Moment in der Gewindespindel eine Axialbewegung derselben relativ zur Querstange 17, derart, dass sich die Gewindespindel 13 drehen lässt. Eine derartige Drehung der Gewindespindel führt zu einer Bewegung der Bolzen 14 in den Schlitzen 15 und somit zu einer Relativbewegung des unteren Endes des Bremshebels 4 relativ zur Zugstange 11 (gemäss Fig. 1). Wenn das Drehmoment an der Gewindespindel ausreichend abgesenkt ist, so dass sich die Gewindespindel gemäss Fig. 2 nach links gerichtet bewegen kann, wird durch die Kraft der Feder 19 die Gewindespindel 13 wiederum gegenüber Drehung abgesichert.

**Patentansprüche**

1. Nachstelleinrichtung für das Bremsgestänge von Schienenfahrzeugen, bei welchem die wirksame Länge einer zwischen zwei Bremshebeln (4, 5) angeordneten Zugstange (11) einstellbar ist und die Zugstange (11) aus zwei Zugstangenkörpern (11') besteht, die sich beidseitig des Rades erstrecken, während wenigstens einer der Bremshebel (4, 5) aus zwei im wesentlichen identischen Bremshebelkörpern (4') besteht und mittels einer Traverse (12) schwenkbar an den zwei Zugstangenkörpern (11') angelenkt ist, wobei die Traverse (12) materialeinheitlich mit einer Mutter besteht, welche auf eine drehbare Gewindespindel (13) aufgeschraubt ist, die durch Blockiermittel (18, 19) in beiden Drehrichtungen gegenüber Drehung relativ zu einer Querstange (17) blockierbar ist, dadurch gekennzeichnet, dass die zwei Bremshebelkörper (4') schwenkbar an der Traverse (12) angelenkt sind, dass die Gewindespindel (13) in der an den zwei Zugstangenkörpern (11') angebrachten Querstange (17) gelagert ist, dass die Blockiermittel (18, 19) in vorbestimmten relativen Axialpositionen der Gewindespindel (13) und der Querstange (17) wirksam sind, und dass eine Feder (19) elastisch die Gewindespindel (13) und die Querstange (17) in ihrer relativen Blockierposition zueinander hält.

2. Nachstelleinrichtung nach Anspruch 1, dadurch gekennzeichnet, dass die Gewindespindel (13) und die Querstange (17) mit axial wirkenden, miteinander im Eingriff befindlichen Zahn-Kupplungsflächen versehen sind, derart, dass ein angelegtes Drehmoment eine axiale relative Kraft hervorruft, und dass die Feder (19) in einer dieser Kraft entgegenwirkenden Weise angebracht ist.

**Claims**

1. Adjusting device for the brake rigging of rail vehicles, wherein the effective length of a connecting rod (11) arranged between two brake levers (4, 5) is capable of adjustment and the connecting rod (11) consists of two connecting rod members (11') extending at either side of the wheel while at least one of the brake levers (4, 5) consists of two essentially identical brake lever members (4') and is articulated by means of a traverse (12) on the two connecting rod members (11'), the traverse (12) being integral with a nut that is screwed onto a reversible threaded spindle (13) which is capable of locking by locking means (18, 19) in both directions of rotation against turning in relation to a cross bar (17), wherein the two brake lever members (4') are pivoted on the traverse (12), the threaded spindle (13) bears on the cross bar (17) attached to the two connecting rod members (11'), the locking means (18, 19) are effective in predetermined axial positions of the threaded spindle (13) and the cross bar (17) and a spring (19) resiliently maintains the threaded spindle (13) and the cross bar (17) in their relative locking position one to the other.

2. Adjusting device according to Claim 1, wherein the threaded spindle (13) and the cross bar (17) are provided with axially acting mutually engaging teethed coupling faces such that an applied torque produces an axial relative force and wherein the spring (19) is mounted in a mode to counteract this force.

**Revendications**

1. Dispositif de rattrapage du jeu pour la timonerie de véhicules sur rails, dans lequel la longueur efficace d'une tige de traction (11) montée entre deux leviers de frein (4, 5) est réglable et la tige de traction (11) est constituée par deux corps de tiges de traction (11') qui s'étendent sur les deux côtés de la roue, alors qu'au moins l'un des leviers de frein (4, 5) est constitué par deux corps de leviers de frein (4') sensiblement identiques et sont articulés à l'aide d'une traverse (12) aux deux corps de tiges de traction (11'), ladite traverse (12) étant constituée d'une pièce et de la même matière avec un écrou qui est vissé sur une broche filetée tournante (12) qui est susceptible d'être bloquée, à l'aide de moyens de blocage (18, 19) et dans les deux sens de rotation, par rapport à une tige transversale (17), caractérisé par le fait que les deux corps de leviers de frein (4') sont articulés à la traverse (12), que la broche filetée (13) est montée dans la tige transversale (17) fixée aux deux corps de tiges de traction (11'), que les moyens de blocage (18, 19) sont efficaces dans des positions axiales prédéterminées de la broche filetée (3) et de la tige transversale (17), et qu'un ressort (19) maintient élastiquement entre elles la broche filetée (13) et la tige transversale (17).

2. Dispositif de rattrapage du jeu selon la revendication 1, caractérisé par le fait que la broche filetée (13) et la tige transversale (17) sont pourvues de surfaces d'accouplement dentées, agissant axialement et en prise entre elles, de manière qu'un couple de rotation appliqué provoque une force axiale rotative, et que le ressort (19) est monté de façon à agir à l'encontre de cette force.

Fig.1

Fig.3

Fig. 2

0 076 335